# EUROPÄISCHE PATENTSCHRIFT

(11) **EP 0 845 091 B1**
(45) Veröffentlichungstag und Bekanntmachung des Hinweises auf die Patenterteilung: **24.07.2002**
(21) Anmeldenummer: 97908117.1
(22) Anmeldetag: 23.01.1997
(51) Int. Cl.: F16H 61/02

(54) **SYSTEM ZUR EINSTELLUNG EINER GETRIEBEÜBERSETZUNG**
SYSTEM FOR SETTINGGEAR RATIO
SYSTEME POUR REGLER LE RAPPORT DE DEMULTIPLICATION D'UNE BOITE DE VITESSES

(30) Priorität: 28.06.1996 DE 19625935
(43) Veröffentlichungstag der Anmeldung: 03.06.1998
(73) Patentinhaber: ROBERT BOSCH GMBH, 70442 Stuttgart (DE)
(72) Erfinder: BOLZ, Martin-Peter, D-71720 Oberstenfeld (DE); HÜLSER, Holger, D-70469 Stuttgart (DE)
(86) Internationale Anmeldenummer: DE9700109
(87) Internationale Veröffentlichungsnummer: WO9800659

(56) Entgegenhaltungen:
- EP-A- 0 326 119
- EP-A- 0 532 957
- EP-A- 0 595 518
- EP-A- 0 638 742
- DE-A- 4 114 033
- DE-A- 4 312 717
- US-A- 4 353 272
- US-A- 5 140 870

## Beschreibung

### Stand der Technik

Das erfindungsgemäße Verfahren bzw. die erfindungsgemäße Vorrichtung zur Einstellung eines in seiner Übersetzung stufenweise veränderbaren Kraftfahrzeuggetriebes geht aus von einem System mit den Merkmalen des Oberbegriffs des Anspruchs 1.

Aus dem Stand der Technik ist eine Vielzahl von Möglichkeiten bekannt, eine Getriebeübersetzung zu bestimmen, die für die Fahrereigenschaft (mehr verbrauchsoder fahrleistungsorientiert), für die jeweilige Fahrsituation bzw. für den jeweiligen Fahrzustand optimal ist. Dabei bildet im allgemeinen der durch die Stellung des Fahrpedals vom Fahrer vorgegebene Vortriebswunsch dem Ausgangspunkt. Hierzu ist insbesondere zu verweisen auf den Artikel ATZ Automobiltechnische Zeitschrift 94 (1992) 9, Seiten 428 bis 436, die US 4,893,526 und die WO 94/24465. Insbesondere, wenn es darum geht, einen bestimmten Vortriebswunsch und/oder eine bestimmte Motordrehzahl durch die Getriebeverstellung zu realisieren, liefern diese Systeme Getriebeübersetzungsverhältnisse, die genau nur mit kontiniuierlich veränderbaren Getrieben CVT einzustellen sind. Handelt es sich aber bei dem Kraftfahrzeuggetriebe um ein Getriebe, das in seiner Übersetzung lediglich stufenweise zu verändern ist, so muß aus der kontinuierlichen Übersetzungsvorgabe ein konkreter Getriebegang bestimmt werden.

Die gattungsgemäße US 4,353,272 zeigt ein System zur koordinierten Ansteuerung eines Fahrzeugmotors und eines Fahrzeuggetriebes. Hierzu wird in Abhängigkeit von der Fahrpedalstellung ein Leistungs-Sollwert ermittelt. Abhängig von dem Leistungs-Sollwert wird die Getriebeübersetzung bestimmt und der Motor eingestellt. Zur Bestimmung der Getriebeübersetzung wird ein Kennfeld (Getriebekennlinienspeicher) benutzt, das je nach Getriebeart (kontinuierlich oder diskret verstellbares Getriebe) unterschiedlich ausgestaltet ist. Abhängig davon, ob ein kontinuierlich oder diskret verstellbares Getriebe vorliegt, muß auch das Motorkennfeld gewählt werden.

Die Aufgabe der vorliegenden Erfindung besteht in der Ermittlung eines Getriebegangs aus einer kontinuierlichen Übersetzungsvorgabe.

Diese Aufgabe wird durch die kennzeichnenden Merkmale des Anspruchs 1 bzw. 9 gelöst.

### Vorteile der Erfindung

Wie erwähnt geht die Erfindung aus von einem Verfahren zur Einstellung eines in seiner Übersetzung stufenweise veränderbaren Kraftfahrzeuggetriebes. Hierbei wird wenigstens abhängig von einer den Fahrerwunsch repräsentierenden ersten Größe eine zweite Größe gebildet, die eine kontinuierliche Sollübersetzung des Getriebes repräsentiert. Der Kern der Erfindung besteht nun darin, daß den Getriebeübersetzungsstufen des Stufengetriebes Übersetzungsbereiche zugeordnet sind. Es wird nun festgestellt, in welchem dieser Übersetzungsbereiche die zweite Größe, also die Sollübersetzung des Getriebes, liegt, woraufhin abhängig von dem festgestellten Übersetzungsbereich eine Getriebeübersetzungsstufe eingestellt wird.

Durch die Erfindung wird erreicht, daß der zu der ermittelten kontinuierlichen Sollgetriebeübersetzung am besten passende Getriebegang realisiert wird. Insbesondere kann durch die

Erfindung eine Vereinheitlichung bzw. eine Modularisierung der Antriebsstrangsteuerungssysteme für Kraftfahrzeuge erreicht werden. Damit ist gemeint, daß ein Modul "Antriebsstrangsteuerung", d. h. eine gemeinsame Steuerung bzw. Regelung der Komponenten Fahrzeugmotor und Fahrzeuggetriebe, unabhängig von den jeweiligen Getriebetyp (Stufengetriebe oder kontinuierlich veränderbares Getriebe) entworfen werden kann. Die durch ein solches Modul "Antriebsstrangsteuerung" gewünschte Sollgetriebeübersetzung wird durch die Erfindung optimal durch ein Stufengetriebe realisiert. Darüber hinaus bietet die Erfindung den Vorteil, daß durch Variation der Übersetzungsbereiche in noch zu beschreibender Weise die Getriebestufe optimal an den jeweiligen Fahrzustand adaptiert werden kann.

In einer vorteilhaften Ausgestaltung der Erfindung ist vorgesehen, daß zur Einstellung einer Getriebeübersetzungsstufe weiterhin die momentan eingestellte Getriebeübersetzung berücksichtigt wird. Hierbei kann vorgesehen sein, daß die Übersetzungsbereiche eine wählbare Übersetzungsbreite aufweisen, wobei die Übersetzungsbreiten derart gewählt sind, daß sich die Übersetzungsbereiche wenigstens zweier benachbarter Getriebestufen überschneiden. Die gebildeten Übersetzungsintervalle, die den gesamten Bereich der kontinuierlichen Übersetzungsvorgabe überdecken, überschneiden sich also gemäß dieser Ausführungsform, so daß in vorteilhafter Weise eine Schalthysterese ermöglicht wird. Überschreitet die kontinuierliche Übersetzungsvorgabe den Rand eines Übersetzungsbereichs des aktuell eingelegten diskreten Getriebegangs, so wird eine Hoch- oder Rückschaltung angefordert. Während durch die schon erwähnte Variation der Übersetzungsbreite ein früheres oder späteres Hoch- bzw. Rückschalten festgelegt wird, kann durch die Wahl der Überschneidung der Übersetzungsbreiten benachbarter Getriebegänge die Anzahl von sog. Pendelschaltungen an den jeweiligen Fahrzustand adaptiert werden. Insbesondere bei einem Fahrbetrieb unter erhöhter Last, beispielsweise bei einem Anhängerbetrieb oder einer Bergauffahrt, können die Überschneidungsbereiche hinreichend groß gewählt werden, so daß die Getriebesteuerung beispielsweise auf eine kurzzeitige Rücknahme des Fahrpedals nicht mit einer Hochschaltung reagiert.

In einer weiteren vorteilhaften Ausgestaltung ist vorgesehen, daß wenigstens eine die Fahrereigenschaft und/oder den momentanen Fahrzustand des Fahrzeugs und/oder die momentane Fahrsituation des Fahrzeuges repräsentierende dritte Größe ermittelt wird. Hierbei ist insbesondere an eine Bestimmung gedacht, ob der Fahrer ein eher kraftstoffoptimiertes oder ein eher leistungsoptimiertes Fahrverhalten aufweist und/oder ein Stadtfahrbetrieb, ein Stop&Go-Fahrbetrieb, ein Fahrbetrieb unter erhöhter Last (beispielsweise Bergauffahrt) und/oder eine Fahrt mit erhöhtem Schlupf (beispielsweise auf Eis/Schnee) und/oder eine Bergabfahrt und/oder ein Kurvenfahrbetrieb vorliegt und/oder ein Warmlaufbetrieb des Fahrzeugmotors stattfindet. Der Kern dieser Ausgestaltung der Erfindung besteht darin, daß die Übersetzungsbereiche eine wählbare Übersetzungsbreite und/oder eine wählbare Lage der jeweils zugeordneten Getriebeübersetzungsstufe aufweisen. Die Übersetzungsbreite und/oder die Lage wird abhängig von der ermittelten dritten Größe gewählt.

Wie schon erwähnt, wird eine Hoch- bzw. Rückschaltvorgang dann ausgelöst, wenn die kontinuierliche Übersetzungsvorgabe den Übersetzungsbereich verläßt. Durch Variation der Übersetzungsbreite und/oder durch Variation der relativen Lage der Übersetzungsbereiche zu den jeweils zugeordneten Getriebeübersetzungsstufen kann erreicht werden, daß Getriebeschaltvorgänge früher oder später, d. h. bei unterschiedlichen Betriebsbedingungen, stattfinden. Diese Erfindungsausgestaltung hat den Vorteil, daß die Gangschaltvorgänge in optimaler Weise an den Fahrertyp, an den Fahrzustand und/oder an die jeweils vorliegenden Umweltbedingungen angepaßt werden können. So kann beispielsweise der Einfluß der Fahrereigenschaft bei einem ökonomisch, d. h. bei einem verbrauchsorientierten Fahrer, darin bestehen, daß die Lage der Übersetzungsbereiche asymmetrisch so verschoben wird, daß niedrigere Übersetzungen, d. h. höhere Getriebegänge, bevorzugt werden.

Darüber hinaus kann vorgesehen sein, daß die oben genannte dritte Größe, d. h. die den Fahrertyp, die Fahrsituation und/oder den Fahrzustand charakterisierende Größe, auch schon die Bildung der Getriebesollübersetzung, also die kontinuierliche Getriebevorgabe, beeinflußt.

Weiterhin kann vorgesehen sein, daß die Einstellung einer Getriebeübersetzungsstufe einer Zulässigkeitsüberprüfung unterzogen wird, wobei die Getriebeübersetzungsstufe abhängig von der ermittelten dritten Größe, insbesondere abhängig von einer erkannten Kurvenfahrt und/oder bzgl. Getriebe- und/oder Motorschutzfunktionen, überprüft wird. In dieser erfindungsgemäßen Ausgestaltung wird also der erfindungsgemäß ermittelte Getriebegang auf Zulässigkeit überprüft und ggf. verhindert. Vorteilhafter Weise ist eine Schaltverhinderung beispielsweise abhängig von der Fahrsituation (z. B. Kurvenfahrt) und/oder abhängig von Schutzfunktionen des Getriebes (um beispielsweise eine Schaltung zu verhindern, während bereits eine Schaltung läuft) und/oder von weiteren Bedingungen oder Zuständen.

Die Erfindung betrifft weiterhin eine Vorrichtung zur Einstellung eines in seiner Übersetzung stufenweise veränderbaren Kraftfahrzeuggetriebes mit Mitteln, mittels der wenigstens abhängig von einer den Fahrerwunsch repräsentierenden ersten Größe eine zweite Größe, die eine Sollübersetzung des Getriebes repräsentiert, gebildet wird. Der Kern dieser erfindungsgemäßen Vorrichtung besteht darin, daß Einstellungsmittel vorgesehen sind, mittels der den Getriebeübersetzungsstufen Übersetzungsbereiche zugeordnet sind und mittels der festgestellt wird, in welchem der Übersetzungsbereiche die zweite Größe liegt und mittel der abhängig von dem festgestellten Übersetzungsbereich eine Getriebeübersetzungsstufe eingestellt wird. Auch bei der erfindungsgemäßen Vorrichtung greifen die schon anhand des erfindungsgemäßen Verfahrens erwähnten Vorteile.

Weitere vorteilhafte Ausgestaltungen sind den Unteransprüchen zu entnehmen.

### Zeichnung

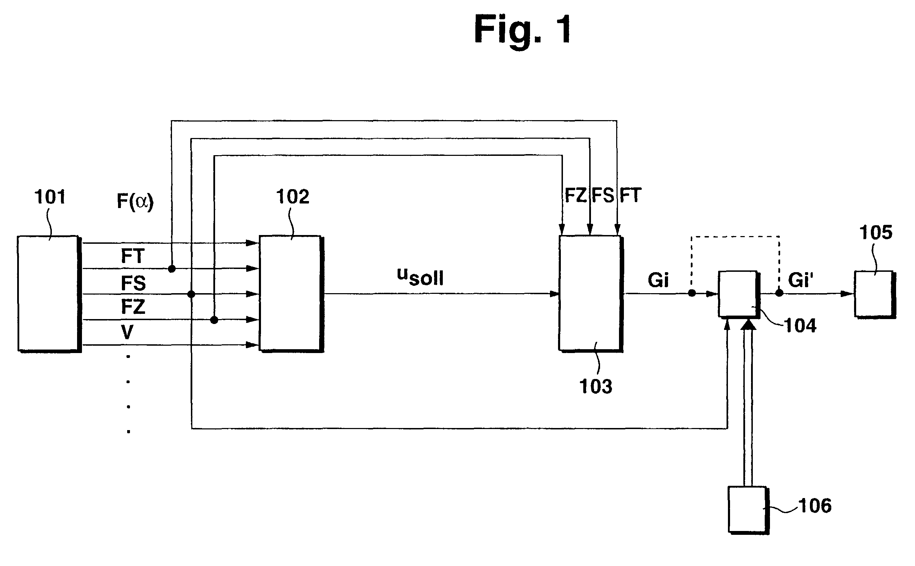

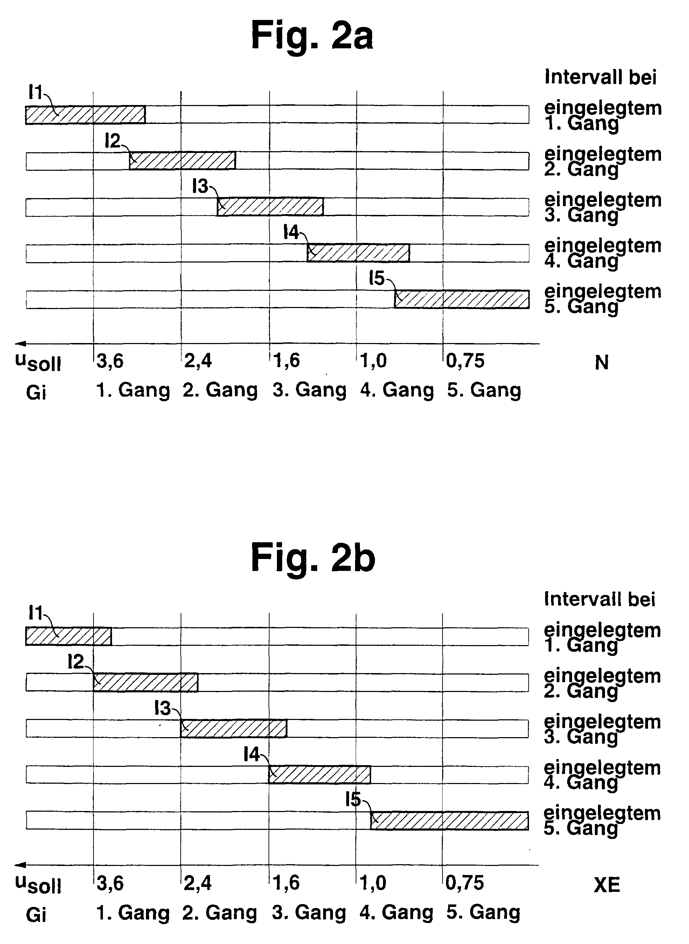

Die Figur 1 zeigt ein Übersichtsblockschaltbild der Erfindung, während die Figuren 2a bis 2d Beispiele von erfindungsgemäßen Zuordnungen darstellen.

### Ausführungsbeispiel

Im folgenden soll die Erfindung anhand eines Ausführungsbeispiels näher erläutert werden.

Die Figur 1 zeigt mit den Bezugszeichen 101 Erfassungsmittel zur Erfassung des Fahrerwunsches F(α), der Fahrereigenschaft FT, der Fahrsituation FS, des Fahrzustands FZ und der Fahrzeuglängsgeschwindigkeit V. Der Fahrerwunsch, d. h. der Vortriebswunsch des Fahrers wird dabei in bekannter Weise durch die Stellung α eines nicht dargestellten Fahrpedals vorgegebenen. Die Fahrereigenschaft FT wird ebenso in bekannter Weise insbesondere abhängig von der Stellung des Fahrpedals und der zeitlichen Änderungen der Fahrpedalstellung ermittelt. Beispielsweise lassen hohe Fahrpedaländerungsgeschwindigkeiten auf einen mehr fahrleistungsorientierten Fahrertyp schließen, während geringe Fahrpedaländerungsgeschwindigkeiten einen eher verbrauchsorientierten Fahrertyp charakterisieren. Das Fahrsituationssignal FS kann beispielsweise angeben, ob sich das Fahrzeug in einem Stadtfahrbetrieb oder einem Stop&Go-Fahrbetrieb oder in einem Fahrbetrieb unter erhöhter Last oder in einem Bergabfahrtbetrieb befindet. Diese unterschiedlichen Fahrsituationen werden im Block 101 in an sich bekannter Weise erfaßt. Hierzu sei beispielhaft auf den eingangs erwähnten Artikel ATZ Autombiltechnische Zeitschrift 94 (1992) 9, Seiten 428 - 436 verwiesen. Als Fahrzustandsgröße FZ kann beispielsweise angegeben werden, ob der Fahrzeugmotor eine bestimmte Temperatur aufweist oder nicht. Die Bildung der Fahrzeuglängsgeschwindigkeit V kann aufgrund der Abtriebsgetriebedrehzahl oder in bekannter Weise durch die Raddrehzahl geschehen.

Diese Signale werden dem Block 102 zugeführt, der eine kontinuierliche Übersetzungsvorgabe als Funktion von
1. dem aus der Fahrpedalstellung abgeleiteten Fahrerwunsch F(α)
2. der Fahrereigenschaft (beispielsweise fahrleistungsorientiertes oder verbrauchsorientiertes Fahrverhalten)
3. der Fahrsituation (beispielsweise Stadtbetrieb, Stop&Go-Fahrbetrieb, Fahren unter erhöhter Last, Bergabfahrt)
4. Umweltbedingungen (beispielsweise Fahrt in großer Höhe)
5. der Fahrzeuglängsgeschwindigkeit
6. dem Fahrzeugzustand (beispielsweise Warmlauf)
bestimmt. Die Funktion des Blocks 102 betrifft nicht den Kern der Erfindung und ist an sich aus dem Stand der Technik bekannt. Hierzu soll beispielhaft auf die eingangs erwähnten Dokumente verwiesen werden. Wesentlich für die Erfindung ist, daß ausgangsseitig des Blocks 102 eine Getriebesollübersetzung uₛₒₗₗ anliegt. Diese Getriebesollübersetzung stellt je nach Regel- bzw. Steuerungsstrategie im Block 102 die optimale Getriebeübersetzung dar. Diese kontinuierliche Übersetzungsvorgabe uₛₒₗₗ muß im Falle eines Stufengetriebes 105 auf die diskreten Gänge dieses Stufengetriebes abgebildet werden. Dies realisiert in erfindungsgemäßer Weise der Block 103.

Hierzu wird dem Block 103 neben der Sollübersetzung uₛₒₗₗ in diesem Ausführungsbeispiel der ermittelte Fahrzustand FZ, die ermittelte Fahrsituation FS und der ermittelte Fahrertyp FT vom Block 101 zugeführt. Ausgangsseitig des Block 103 liegt die Getriebegangvorgabe Gᵢ, die direkt oder indirekt (104) dem Stufengetriebe 105 bzw. dessen Steuereinheit zugeführt werden kann.

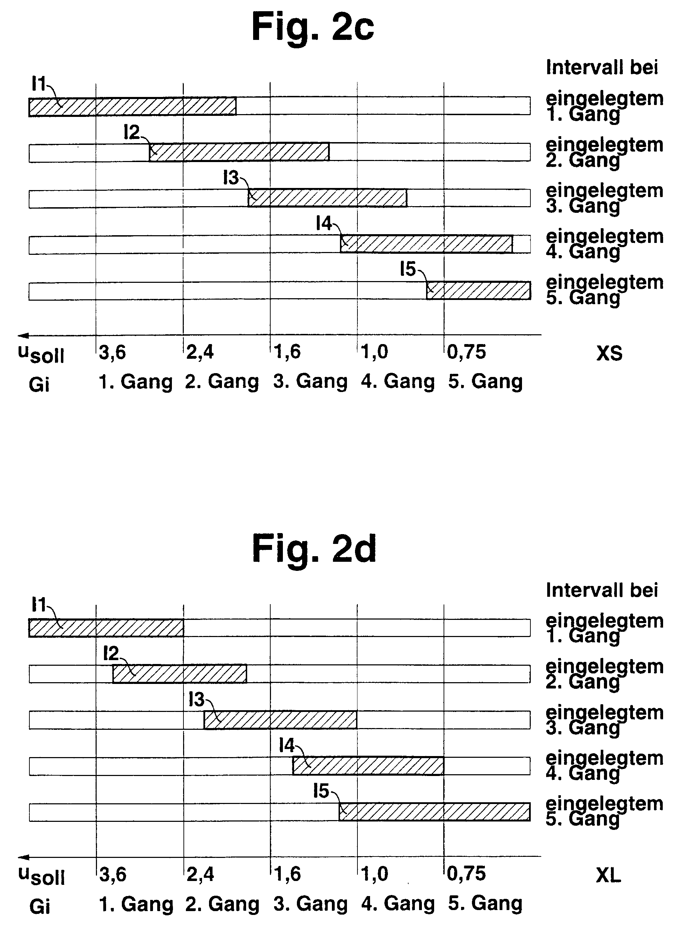

Die Funktionsweise bzw. des Übertragungsverhalten des Blocks 103 soll anhand der Figuren 2a, 2b, 2c und 2d beispielhaft erläutert werden. Im Block 103 wird, wie erwähnt, die kontinuierliche Übersetzungsvorgabe auf die diskreten Getriebegänge abgebildet. Das in den Figuren 2a bis 2d gezeigte Ausführungsbeispiel geht dabei von 5 Getriebegängen Gᵢ (i = 1, 2, 3, 4, 5). Um jeden Getriebegang Gᵢ wird ein Übersetzungsintervall Iᵢ gebildet, auf daß dieser Getriebegang abgebildet werden soll.

Die Figur 2a zeigt beispielhaft eine solche Abbildung anhand eines Fünfganggetriebes, wobei im horizontalen Verlauf die Getriebegänge Gᵢ bzw. die kontinuierliche Übersetzungsvorgabe uₛₒₗₗ dargestellt ist. Im vertikalen Verlauf sind die Übersetzungsintervalle bzw. die Übersetzungsbereiche Iᵢ für die fünf Getriebegänge eingezeichnet.

Die Figur 2a zeigt dabei beispielhaft die Abbildung im Falle eines normalen, d. h. weder fahrleistungsorientierten noch verbrauchsorientierten, Fahrertyps. Die Übersetzungsbereiche Iᵢ sind im wesentlichen symmetrisch um die Getriebegangstufen Gᵢ verteilt. Die so gebildeten Übersetzungsintervalle bzw. Übersetzungsbereiche Iᵢ überdecken dabei den gesamten Bereich der kontinuierlichen Übersetzungsvorgabe uₛₒₗₗ, wobei sie sich in diesen Ausführungsbeispielen überschneiden, um eine Hysterese zu ermöglichen. Ist nun ein bestimmter Getriebegang Gₓ eingelegt und überschreitet die kontinuierliche Übersetzungsvorgabe uₛₒₗₗ den rechten Rand des zu dem Gang gehörigen Übersetzungsbereichs Iₓ, so wird ein Hochschaltvorgang zu dem nächst höheren Getriebegang Gₓ₊₁ veranlaßt. Verläßt die kontinuierliche Übersetzungsvorgabe uₛₒₗₗ den linken Rand des Übersetzungsbereichs Iₓ, so wird ein Rückschaltvorgang veranlaßt. Auf diese Weise wird deutlich, daß durch ein Überschneiden bzw. Überlappen der Übersetzungsbereiche Iᵢ ein mehr oder weniger ausgeprägtes Schalthystereseverhalten zu realisieren ist.

Die Übersetzungsbereiche Iᵢ zeichenen sich durch die Übersetzungsbreite (Übersetzungsbreite der einzelnen Übersetzungsbereiche Iᵢ) und durch die Lage der eizelnen Bereiche Iᵢ zu den dazugehörigen festen Getriebeübersetzungen aus. Das oben erwähnte Hystereseverhalten kann zum einen durch eine entsprechend gewählte Lage erreicht werden, wird aber im allgemeinen eher durch die Breite realisiert.

Der Einfluß der Fahrereigenschaft, ein beispielsweise eher verbrauchsorientierter Fahrertyp, kann beispielsweise darin bestehen, daß die Lage der Übersetzungsbereiche Iᵢ asymmetrisch so verschoben sind, daß niedrigere Übersetzungen, d. h. höhere Getriebegänge, bevorzugt werden. Dies ist beispielhaft in der Figur 2b gezeigt. Ein eher fahrleistungsorientiertes Fahrverhalten wird in der Figur 2c gezeigt, wobei hier die Übersetzungsbereiche Iᵢ derart asymmetrisch verschoben sind, daß möglichst häufig in niedrigen Getriebgängen gefahren wird.

Die Fahrsituation Fahren unter erhöhter Last, beispielsweise im Anhängerbetrieb oder bei einer Bergauffahrt, ist in der Figur 2d zu sehen. Dies kann dazu führen, daß die Übersetzungsbereiche Iᵢ verbreitert werden, um Pendelschaltungen zu verhindern und die Schalthäufigkeit zu reduzieren.

Die so ermittelte Getriebegangstufe Gᵢ kann, wie erwähnt, entweder direkt der Getriebesteuerung bzw. dem Getriebe 105 zur Einstellung zugeführt werden, es kann aber auch vorgesehen sein, daß im Block 104 die Schaltanforderung Gᵢ auf Zulässigkeit überprüft und ggf. verhindert wird. Diese Schaltverhinderung kann beispielsweise abhängen von
1. der Fahrsituation (beispielsweise Kurvenfahrt)
2. Schutzfunktion des Getriebes (um beispielsweise eine Schaltung zu verhindern, während bereits eine Schaltung läuft)
oder weiterer Bedingungen oder Zustände. Hierzu wird dem Block 104 das Fahrsituationssignal FS vom Block 101 zugeführt. Daneben wird dem Block 104 vom Block 106 die Information zugeleitet, ob momentan ein Schaltvorgang vorliegt oder nicht.

Eine als zulässig bewertete Schaltanforderung Gᵢ' wird daraufhin an das Automatikgetriebe 105 gesandt.

## Patentansprüche

1. Verfahren zur Einstellung eines in seiner Übersetzung (Gᵢ) stufenweise veränderbaren Kraftfahrzeuggetriebes (105), wobei wenigstens abhängig von einer den Fahrerwunsch repräsentierenden ersten Größe [F(α)] eine zweite Größe (uₛₒₗₗ), die eine Soll-Übersetzung des Getriebes (102) repräsentiert, gebildet wird, **dadurch gekennzeichnet, dass** die zweite Größe (uₛₒₗₗ) als kontinuierliche Größe gebildet wird und den Getriebeübersetzungsstufen (Gᵢ) Übersetzungsbereiche (Iᵢ) zugeordnet sind und festgestellt wird, in welchem der Übersetzungsbereiche (Iᵢ) die zweite Größe (uₛₒₗₗ) liegt und abhängig von dem festgestellten Übersetzungsbereich (Iᵢ) eine Getriebeübersetzungsstufe (Gᵢ) eingestellt wird.

2. Verfahren nach Anspruch 1, **dadurch gekennzeichnet, daß** zur Einstellung einer Getriebeübersetzungsstufe (Gᵢ) weiterhin die momentan eingestellte Getriebeübersetzung berücksichtigt wird.

3. Verfahren nach Anspruch 1, **dadurch gekennzeichnet, daß** die Übersetzungsbereiche (Iᵢ) eine wählbare Übersetzungsbreite und/oder eine wählbare Lage zu der jeweils zugeordneten Getriebeübersetzungsstufe (Gᵢ) aufweisen und die Übersetzungsbreiten und/oder die Lage zu der jeweils zugeordneten Getriebeübersetzungsstufe (Gᵢ) derart gewählt sind, daß sich die Übersetzungsbereiche (Iᵢ) wenigstens zweier benachbarter Getriebeübersetzungsstufen (Gᵢ, Gᵢ₋₁, Gᵢ₊₁) überschneiden.

4. Verfahren nach Anspruch 1, **dadurch gekennzeichnet, daß** wenigstens eine die Fahrereigenschaft und/oder den momentanen Fahrzustand des Fahrzeugs und/oder die momentane Fahrsituation des Fahrzeugs repräsentierende dritte Größe (FT, FZ, FS) ermittelt wird.

5. Verfahren nach Anspruch 4, **dadurch gekennzeichnet, daß** zur Ermittlung der dritten Größe (FT, FZ, FS) bestimmt wird, ob
- der Fahrer ein eher kraftstoffverbrauchsoptimiertes oder ein eher leistungsoptimiertes Fahrverhalten aufweist (Fahrereigenschaft, FT) und/oder
- ein Stadtfahrbetrieb, ein Stop&Go-Fahrbetrieb, ein Fahrbetrieb unter erhöhter Last (z.B. Bergauffahrt), eine Fahrt mit erhöhtem Schlupf, beispielsweise auf Eis/Schnee, und/oder eine Bergabfahrt und/oder ein Kurvenfahrtbetrieb (FS) vorliegt und/oder
- ein Warmlaufbetrieb des Fahrzeugmotors (FZ) vorliegt.

6. Verfahren nach Anspruch 4 oder 5, **dadurch gekennzeichnet, daß** die Übersetzungsbereiche (Iᵢ) eine wählbare Übersetzungsbreite und/oder eine wählbare Lage zu der jeweils zugeordneten Getriebeübersetzungsstufe (Gᵢ) aufweisen und die Übersetzungsbreite und/oder die Lage abhängig von der ermittelten dritte Größe (FT, FZ, FS) gewählt wird.

7. Verfahren nach Anspruch 4 oder 5, **dadurch gekennzeichnet, daß** zweite Größe (uₛₒₗₗ) weiterhin abhängig von der ermittelten dritte Größe (FT, FZ, FS) gebildet wird.

8. Verfahren nach Anspruch 1, **dadurch gekennzeichnet, daß** die Einstellung einer Getriebeübersetzungsstufe (Gᵢ) darüber hinaus einer Zulässigkeitsüberprüfung (104) unterzogen wird, wobei die Getriebeübersetzungsstufe (Gᵢ) abhängig von der ermittelten dritten Größe (FS), insbesondere abhängig von einer erkannten Kuvenfahrt, überprüft wird und/oder bezüglich Getriebe- und/oder Motorschutzfunktionen überprüft wird.

9. Vorrichtung zur Einstellung eines in seiner Übersetzung (Gᵢ) stufenweise veränderbaren Kraftfahrzeuggetriebes (105), mit Mitteln (102), mittels der wenigstens abhängig von einer den Fahrerwunsch repräsentierenden ersten Größe [F(α)] eine zweite Größe (uₛₒₗₗ), die eine Soll-Übersetzung des Getriebes (102) repräsentiert, gebildet wird, **dadurch gekennzeichnet, dass** die zweite Größe (uₛₒₗₗ) als kontinuierliche Größe gebildet wird und Einstellungsmittel (102) vorgesehen sind, mittels der den Getriebeübersetzungsstufen (Gᵢ) Übersetzungsbereiche (Iᵢ) zugeordnet sind und mittels der festgestellt wird, in welchem der Übersetzungsbereiche (Iᵢ) die zweite Größe (uₛₒₗₗ) liegt und mittels der abhängig von dem festgestellten Übersetzungsbereich (Iᵢ) eine Getriebeübersetzungsstufe (Gᵢ) eingestellt wird.

10. Vorrichtung nach Anspruch 9, **dadurch gekennzeichnet, daß** Mittel (101) vorgesehen sind, mittels der wenigstens eine die Fahrereigenschaft und/oder den momentanen Fahrzustand des Fahrzeugs und/oder die momentane Fahrsituation des Fahrzeugs repräsentierende dritte Größe (FT, FZ, FS) ermittelt wird und die Einstellungsmittel (103) derart ausgestaltet sind, daß die Übersetzungsbereiche (Iᵢ) eine wählbare Übersetzungsbreite und/oder eine wählbare Lage zu der jeweils zugeordneten Getriebeübersetzungsstufe (Gᵢ) aufweisen und die Übersetzungsbreite und/oder die Lage abhängig von der ermittelten dritte Größe (FT, FZ, FS) gewählt wird.

## Claims

1. Method for setting a motor vehicle gearbox (105) whose transmission ratio (Gᵢ) can be varied incrementally, a second variable (uₛₑₜₚ) which represents a setpoint transmission ratio of the gearbox (102) being formed at least as a function of a first variable [F(α)] which represents the driver's request, **characterized in that** the second variable (uₛₑₜₚ) is formed as a continuous variable and the transmission ranges (Iᵢ) are assigned to the gearbox transmission speeds (Gᵢ), and in which of the transmission ranges (Iᵢ) the second variable (uₛₑₜₚ) lies is detected and a gearbox transmission ratio (Gᵢ) is set as a function of the detected transmission range (Iᵢ).

2. Method according to Claim 1, **characterized in that** the instantaneously set gearbox transmission ratio is also taken into account for the setting of a gearbox transmission ratio (Gᵢ).

3. Method according to Claim 1, **characterized in that** the transmission ranges (Iᵢ) have a selectable transmission width and/or selectable position with respect to the respectively assigned gearbox transmission speed (Gᵢ), and the transmission widths and/or the position with repect to the respectively assigned gearbox transmission speed (Gᵢ) are selected in such a way that the transmission ranges (Iᵢ) of at least two adjacent gearbox transmission speeds (Gᵢ, Gᵢ₋₁, Gᵢ₊₁) overlap.

4. Method according to Claim 1, **characterized in that** a third variable (FT, FZ, FS) which represents the driver feature and/or the instantaneous driving state of the vehicle and/or the instantaneous driving situation of the vehicle is determined.

5. Method according to Claim 4, **characterized in that** in order to determine the third variable (FT, FZ, FS), it is determined whether
- the driver has a more fuel consumption-optimized driving style or a more performance-optimized driving style (driver feature, FT) and/or
- a town cycle mode, a stop and go mode, a driving mode with increased load (for example uphill travel), travel with increased slip, for example on ice/snow, and/or downhill travel and/or the cornering mode (FS) is present and/or
- a warm-up mode of the vehicle engine (FZ) is present.

6. Method according to Claim 4 or 5, **characterized in that** the transmission ranges (Iᵢ) have a selectable transmission width and/or a selectable position with respect to the respectively assigned gearbox transmission speed (Gᵢ) and the transmission width and/or the position is selected as a function of the third variable (FT, FZ, FS) determined.

7. Method according to Claim 4 or 5, **characterized in that** a second variable (uₛₑₜₚ) continues to be formed as a function of the third variable (FT, FZ, FS) determined.

8. Method according to Claim 1, **characterized in that** the setting of a gearbox transmission spped (Gᵢ) is furthermore subjected to a reliability check (104), the gearbox transmission speed (Gᵢ) being checked as a function of the third variable (FS) which is determined, in particular as a function of detected cornering and/or is checked with respect to gearbox functions and/or engine protection functions.

9. Device for setting a motor vehicle gearbox (105) whose transmission ratio (Gᵢ) can be varied incrementally and has means (102) by means of which the second variable (uₛₑₜₚ) which represents a setpoint transmission ratio of the gearbox (102) is formed at least as a function of a first variable [F(α)] which represents the driver's request, **characterized in that** the second variable (uₛₑₜₚ) is formed as a continuous variable and setting means (102) are provided by means of which transmission ranges (Iᵢ) are assigned to the gearbox transmission speeds (Gᵢ) and by means of which it is detected in which of the transmission ranges (Iᵢ) the second variable (uₛₑₜₚ) lies, and by means of which a gearbox transmission speed (Gᵢ) is set as a function of the detected transmission range (Iᵢ).

10. Device according to Claim 9, **characterized in that** means (101) are provided by means of which a third variable (FT, FZ, FS) which represent the driver feature and/or the instantaneous driving state of the vehicle and/or the instantaneous driving situation of the vehicle is determined, and the setting means (103) are designed in such a way that the transmission ranges (Iᵢ) have a selectable transmission width and/or a selectable position with respect to the respectively assigned gearbox transmission speed (Gᵢ), and the transmission width and/or the position is selected as a function of the third variable (FT, FZ, FS) determined.

## Revendications

1. Procédé pour régler un rapport de vitesse (Gᵢ) d'une boîte de vitesses de véhicule (105) variable de manière discontinue, selon lequel, au moins en fonction d'une première grandeur [F(α)], représentant la demande du conducteur, on forme une seconde grandeur (u_{cons}) qui représente un rapport de consigne de la boîte de vitesses (102),
**caractérisé en ce que**
la seconde grandeur (u_{cons}) est formée comme grandeur continue et des plages de rapports (Iᵢ) sont associées aux rapports de vitesses (Gᵢ), et on fixe dans quelle plage de rapports (Iᵢ) la seconde grandeur (u_{cons}) se situe, et en fonction de la plage de rapports (Iᵢ) constatée on règle un rapport de vitesse (Gᵢ).

2. Procédé selon la revendication 1,
**caractérisé en ce que**
pour régler un rapport de vitesse (Gᵢ), on tient compte en outre du rapport de vitesse réglé momentanément.

3. Procédé selon la revendication 1,
**caractérisé en ce que**
les plages de rapports (Iᵢ) ont une largeur de rapport variable et/ou une position variable par rapport aux rapports de vitesse (Gᵢ) respectivement associés et les largeurs de rapport et/ou la position sont choisies en fonction des rapports de vitesse (Gᵢ) respectivement associés pour que les plages de rapports (Iᵢ) d'au moins deux rapports de vitesse voisins (Gᵢ, Gᵢ₋₁, Gᵢ₊₁) se chevauchent.

4. Procédé selon la revendication 1,
**caractérisé en ce qu'**
on détermine une troisième grandeur (FT, FZ, FS) représentant au moins l'une des grandeurs telles que le type de conducteur et/ou l'état de conduite instantané du véhicule et/ou la situation de conduite momentanée du véhicule.

5. Procédé selon la revendication 4,
**caractérisé en ce que**
pour déterminer la troisième grandeur (FT, FZ, FS) on détermine si
- le conducteur choisit plutôt un mode de conduite économique ou un mode de conduite sportive (type de conducteur, FT) et/ou
- si le véhicule est en conduite urbaine, en mode marche/arrêt, en mode sous charge élevée (par exemple en montée), en conduite avec un patinage important (par exemple sur de la glace/neige) et/ou une descente et/ou un trajet en courbe (FS), et/ou
- si le moteur du véhicule est en phase de chauffage.

6. Procédé selon les revendications 4 ou 5,
**caractérisé en ce que**
les plages de rapports (Iᵢ) ont une largeur de rapport variable et/ou une position variable en fonction du rapport de vitesse (Gᵢ) associé respectivement et la largeur du rapport et/ou sa position sont choisis en fonction de la troisième grandeur (FT, FZ, FS).

7. Procédé selon les revendications 4 ou 5,
**caractérisé en ce que**
la seconde grandeur (u_{cons}) est formée toujours de manière indépendante de la troisième grandeur obtenue (FT, FZ, FS).

8. Procédé selon la revendication 1,
**caractérisé en ce que**
le réglage d'un rapport de vitesse (Gᵢ) est en outre soumis à un contrôle d'acceptabilité (104), le rapport de vitesse (Gᵢ) étant vérifié en fonction de la troisième grandeur obtenue (FS), notamment en fonction de la détection d'un trajet en courbe et/ou par rapport aux fonctions de protection de la boîte de vitesse et/ou du moteur.

9. Dispositif pour régler une boîte de vitesses (105) dont les rapports (Gᵢ) sont variables de manière discontinue, comprenant des moyens (102) à l'aide desquels, au moins en fonction d'une première grandeur [(F (α)] représentant la demande du conducteur, on forme une seconde grandeur (u_{cons}) représentant une démultiplication de consigne de la boîte de vitesse (102),
**caractérisé en ce que**
la seconde grandeur (u_{cons}) est formée comme grandeur continue et on prévoit des moyens de réglage (102) permettant d'associer des plages de rapports (Iᵢ) aux rapports de vitesse (Gᵢ) et de déterminer dans quelle plage de rapports (Iᵢ) se situe la seconde grandeur (u_{cons}), et à l'aide desquels, en fonction de la plage de rapports (Iᵢ) constatée, on règle un rapport de boîte de vitesses (Gᵢ).

10. Dispositif selon la revendication 9,
**caractérisé par**
des moyens (101) servant à déterminer au moins une troisième grandeur (FT, FZ, FS) représentant le type de conducteur et/ou l'état de fonctionnement instantané du véhicule et/ou la situation de conduite momentanée du véhicule, et les moyens de réglage (103) sont conçus pour que les plages de rapports (Iᵢ) aient une largeur de démultiplication choisie et/ou une position choisie pour le rapport de démultiplication (Gᵢ) respectif, et la largeur de démultiplication et/ou la position sont choisies en fonction de la troisième grandeur (FT, FZ, FS).
